# EUROPEAN PATENT SPECIFICATION

(11) **EP 0 547 460 B1**
(45) Date of publication and mention of the grant of the patent: **20.02.2008**
(21) Application number: 92120814.6
(22) Date of filing: 05.12.1992
(51) Int. Cl.: H04N 7/24

(54) **Method and system for adapting the refresh frequency cycle to the image complexity**
Verfahren und System zum Anpassen des Auffrischungszyklus an die Komplexität des Bildes
Méthode et système pour adapter le cycle de la fréquence de rafraîchissement à la complexité de l'image

(30) Priority: 18.12.1991 IT MI913401
(43) Date of publication of application: 23.06.1993
(73) Proprietor: Alcatel Lucent, 75008 Paris (FR)
(72) Inventor: Modena, Marco, I-35137 Padova (IT); Roncatti, Tullio, I-20127 Milano (IT)
(74) Representative: Colombo, Stefano Paolo

(56) References cited:
- EP-A- 0 267 581
- US-A- 4 651 206
- US-A- 4 888 640
- US-A- 5 057 916
- IEEE TRANSACTIONS ON CIRCUITS AND SYSTEMS FOR VIDEO TECHNOLOGY vol. 1, no. 1, March 1991, NEW YORK US pages 4 - 13 M.BARBERO ET AL. 'A Bit-Rate Reduction System for HDTV transmission'
- SIGNAL PROCESSING. IMAGE COMMUNICATION vol. 2, no. 4, December 1990, AMSTERDAM NL pages 397 - 407 M.GHANBARI 'Motion Vector Replenishment for low-bit rate video coding'
- IEEE ICC'90 INTERNATIONAL CONFERENCE ON COMMUNICATIONS 15 April 1990, IEEE, NEW YORK, US; pages 1607 - 1611 M.BARBERO ET AL. 'Bit-Rate Reduction Techniques Based on DCT for HDTV Transmission'
- IEEE 1990 INTERNATIONAL SYMPOSIUM ON CIRCUITS AND SYSTEMS IEE,NEW YORK, US; pages 1903 - 1906 Y.OHTSUKA ET AL. 'Digital Bit-Rate Reduction system for HDTV'

## Description

The present invention relates to a method of refresh in redundancy reduction transmission systems for digital television signals. The present invention also relates to a coding system for carrying out the method of refresh.

The present application claims priority from IT-A-1252546, (Italian application N. MI91A003401) which is characterized in that for the interruption of the predictive coding an intra- field coding is used on odd fields and an interfield or an intra- field coding is carried out on next even field in Nr consecutive strips co-positioned in the two fields.

As described in the priority application, correlated digital signals can be transmitted efficiently if correlation is used for reducing the amount of information to be sent. According to known techniques this can be obtained e.g. by grouping the signal samples and encoding them in blocks. Another conventional technique consists in using a combination of samples predictor preceding the actual one to estimate the latter, then calculating the difference between the present sample and predictor. The obtained signal (prediction error) contains less information than the originary signal. As a negative aspect of such technique it is noted that a transmission error does not allow to reconstruct correctly the signal from the receive side. It follows that the transmitter has to operate so as to allow a correct operation of the receiver after a tolerable transient of the end user. A conventional technique consists in using a multiplication factor, less than one, in the construction of the predictor (oblivion factor). The transient decreases as the magnitude of the oblivion factor decreases. Another used technique consists in alternating the prediction error transmission with the transmission of the sample itself (refresh).

In particular such refresh technique can be applied in redundancy reduction numerical transmission systems for television signals which is assumed to be discrete in the three, horizontal, vertical and time, directions and is characterized by a certain correlation degree in each dimension. As said before, the maximum coding efficiency is obtained by scanning the correlation in all three dimensions. For instance, the more advanced algorithms consists in a two-dimensional block coding in horizontal and vertical directions, and a predictive coding in the time direction. Blocks e.g. are formed by M segments of consecutive television lines each comprising N consecutive pixels. It follows, beside a reduction in the generated bit-rate, a greater sensitivity to transmission errors which can be reflected indefinitely in the direction of time. At time intervals the predictive coding is excluded and replaced by the sole "block type" coding (refresh). One of the less desirable collateral aspects of the refresh process is connected with the fact that it involves an increase in the information to be transmitted.

M. Barbero et al.: "A bit rate reduction system for HDTV transmission", March 1991, IEEE Transactions on Circuits and Systems for Video Technology shows a redundancy reduction transmission system for digital television signals according to the preamble of claim 1. It operates on an interlaced television signal with four modes. An intra-field mode, whereby coding is performed taking into consideration the video samples belonging to the current field only; an inter-frame mode, whereby coding is performed taking into consideration the difference between the video samples of the current field and the co-located video samples of the, previous field of same parity; a motion compensated inter-frame mode, whereby coding is performed taking into consideration the difference between the video samples of the current field and motion compensated video samples of the previous field of same parity; and an inter-field mode, whereby coding is performed taking into consideration the difference between the video samples of the current field and interpolated video samples obtained from averaging the samples belonging to adjacent lines of the immediately previous field, which is of a different parity. The mode selection is operated on the basis of the AC energy of the blocks. It is an object of the present invention to improve the coding efficiency when the refresh technique is used. This object is achieved in that said refresh technique is applied to a variable number of strips depending upon the complexity of the source signal. The complexity is measured by the storage fill level of the elastic memory buffer.

One way of carrying out the invention is described in detail below with reference to the accompanying drawings in which:
Fig.1 shows the construction of an interfield predictor;
Fig.2 shows a block diagram of an hybrid DCT encoder with refresh control linked to the fill level of the buffer;and
Fig.3 shows an example of motion compensated prediction.

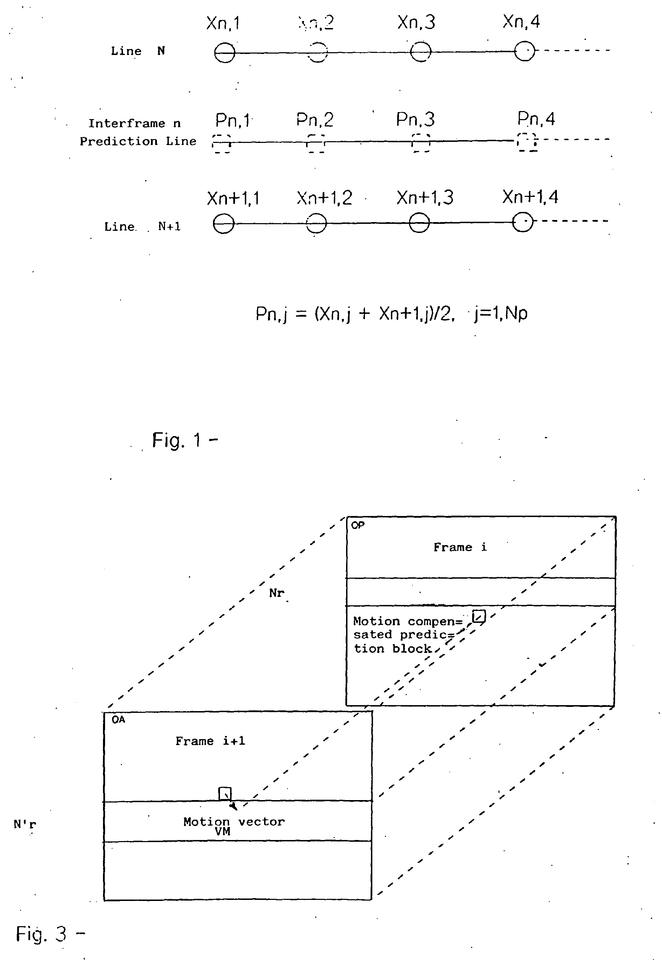

The encoders of the lash generation construct the prediction starting from the samples present on the field that precedes the present field and on the second preceding field. The prediction block can be constituted by samples (pixels) located in vertical and horizontal position corresponding to the pixels constituting the present block,by pixels having different space location but still forming a block (compensation of motion) or obtained from linear or non -linear combinations of differently arranged pixels. The television signal format contemplates that the television frame is formed by two fields commonly known as odd field and even field. The lines of each field numbered as 1 to N1, are located in an intermediate position with respect to the lines of adjacent fields, A prediction block on the preceding field, co- located with the actual one, can be constructed through arithmetical operations on samples, e.g. by interpolating vertically samples of consecutive lines (interfield predictor). The construction of such predictor is illustrated in fig 1.

A prediction block is obtained starting from the second preceding field (preceding frame) e.g. formed by pixels co - positioned to pixels of the present block, A prediction block still belonging to the preceding frame can be constructed also starting by non co - positioned pixels, but still block-arranged (motion compensated interfield predictor). Moreover it could be convenient to encode directly the present block without making use of a predictor (infra - field coding).

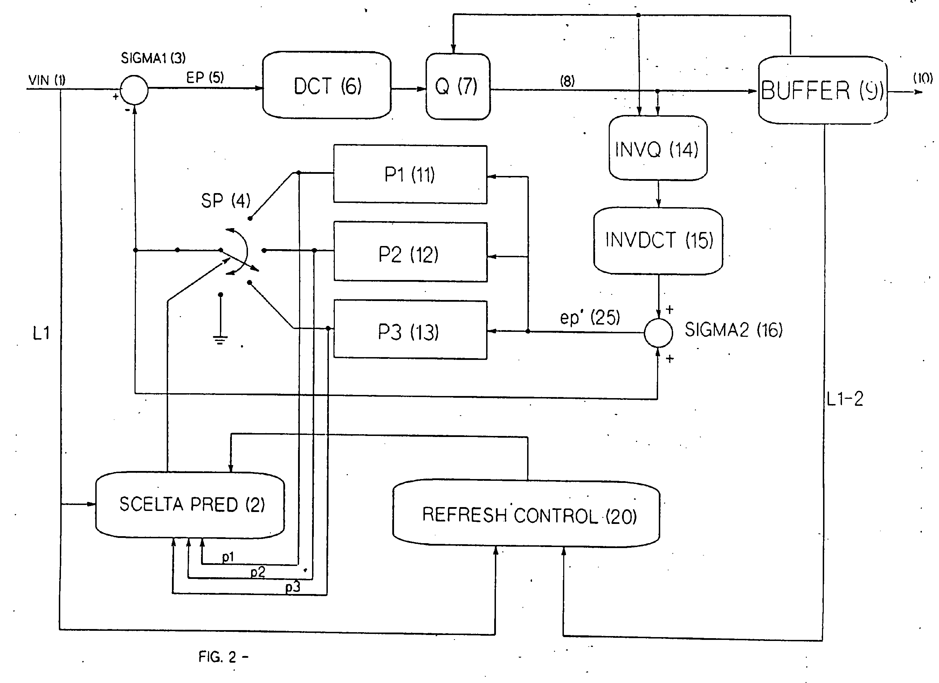

The coding system given as an example is schematised in fig 2. The incoming signal VIN (1) is a television signal digitized and arranged in blocks of NXM pixels. Blocks P1, F 2 and P3 (11, 12 respectively 13) form the above mentioned prediction blocks; block SCELTA - PRED (2) examines the incoming signal VIN along with prediction signal p1, p2, p 3 generated by P1, P2 and P3 and selects for each block the predictor that minimizes the information to be transmitted; block SCELTA - PRED (2) can further consider more efficient the intra - field signal transmission. The selected predictor is sent to the SIGMA 1 adder (3) through distributor SP (4).

Said SIGMA 1 adder (3) generates the prediction error signal EP (5) and feeds it to block DCT (6) that carries out the redundance reduction in vertical and horizontal directions. Quantizer block Q (7) quantizes with variable step the output of the encoder block DCT (6). The output (8) of Q (7) is fed to block BUFFER (9) for the subsequent transmission and to INVQ (14) which operates the function of complementer expansion of Q(7). The purpose of the presence of BUFFER (9) is to adapt the broadly variable data generation rate of the encoder to the bit rate which is constant. Block BUFFER (9) further controls the quantization step of Q (7) and INV Q (14) in order to avoid data overflows in BUFFER (9) itself. Block INVDCT (15) reconstructs the prediction error signal EP' (25) which, added to the selected prediction signal p1, p2 or p3 through SIGMA 2 (16), reconstructs an estimate of the incoming signal VIN (1). Block REFRESH - CONTROL (20) extracts the clocking from the incoming video signal VIN (1) through connection L1 and binds in certain circumstances the choices made by SCELTA-PRED (2).

As noted previously the predictive coding must be interrupted Such interruption driven by the REFRESH CONTROL circuit (20) implies,conventionally, the intra - field coding of a certain number of strips. The number of refreshed strips at each frame is established so as to fix an upper limit for the time during which an error may stay on the screen. Therefore ,in order to minimize distortion, it is necessary to effect refresh on a high number of strips per frame. On the other hand the intra - field forced coding is less efficient than the predictive coding.
The present invention,starting from what described above, reduces the overall distortion introduced by the encoder by adapting the refresh frequency to the complexity of the incoming signal VIN (1). Advantageously the complexity of such a signal (1), which increases as the autocorrelation of the signal itself decreases, is now measured by the storage fill level of the elastic memory BUFFER (9). To this end REFRESH CONTROL (20) is now linked through line L 1 - 2 to BUFFER (9). It has been discovered that depending on the level of the elastic memory BUFFER (9) the number of refreshed strips at each field is critically varied from a minimum of one to a maximum of eight and the relative refresh period (for a standard definition video 625 lines per frame and 25 frames per second and for strips composed of eight television lines is to be kept comprised between about one second and one eighth of a second.The number of refreshed strips Nr assumes the minimum value when the complexity of the image is very high, Nr is gradually increased as such complexity decreases, so that distortion coming from a line error stays on for the shortest possible time.
Since the persistence of an eventual line error is inversely proportional to parameter Nr, this is limited by the quality requirements of the reconstructed signal. As said in advance, refresh consists in the infra - field forced coding of Nr strips belonging to a generic odd field and of intra - field or interfield type coding of Nr corresponding strips belonging to next even field. In order to obtain a progressive scanning of the refresh all over the television field, forced coding of N'r adjacent strips is carried out on the immediately successive frame. The fact is easily explained by a numerical example. Provided that in the pair of fields "i" the refresh has effected the strips K, K + 1, ....., K + Nr - 1, in the pair of fields "i + 1 " the strips affected by refresh will be those numbered as K + Nr ,...., K + Nr + N'r - 1. The use of parameter N'r is justified by the fact that the number of refreshed strips can be changed from one frame to the next one. Such technique allows the elimination of the time propagation of errors when interfield and interframe codings are used, but not the space propagation of errors when the coding is of the type motion compensated interframe. For instance in fig 3 two successive frames with refresh of Nr strips on the ith frame and N'r strips on the (i + 1) st frame are taken into consideration. In the assumption of errors during transmission relative to block 1 (belonging to i.th frame) and of coding of block 2 (belonging to i + 1 st frame) of type motion compensated interframe, based upon the motion - vector which from 1' leads to 2 there is space propagation of errors in time thus frustrating the effect of refresh. In order to make up for such drawback, if Np is the maximum amplitude of the vertical component of the motion - vector, it is conventional technique to define an area formed by Np lines in which the coding of the type motion compensated interframe is inhibited or enabled by imposing the motion - vector to zero (interframe coding). Belonging to such area are the last line of the last refreshed strip of the preceding frame as well as the Np - 1 preceding lines. The blocks which, even if partially comprise one or more lines of said area cannot use the motion - compensated interframe coding. A further novel feature of the invention, is the capability of using said coding by imposing constraints only to the vertical component of the motion - vector and only in the direction opposite to the progression of the refresh strips, in order to optimize the use of the available bit rate. Such constraints do not allow to use blocks of the preceding frame, that have not been refreshed, in the coding,

## Claims

1. Method of refreshing a digital television signal transmitted in a redundancy reduction transmission system, said digital television signal comprising pixels arranged along the horizontal, vertical and time dimensions and consisting of frames made of odd and even fields, each of said fields having 1 to N1 television lines located in an intermediate position with respect to the lines of temporally adjacent fields, whereby a two-dimensional block coding is carried out in said horizontal and vertical dimensions and a predictive coding in said time dimension, said method comprising the following steps:
a) forming a block of a given field of a given frame, said block including M segments of consecutive television lines, each of said M segments comprising N consecutive pixels;
b) forming (11) a first prediction block by pixels belonging to a frame immediately preceding said given field;
c) constructing (12) a second prediction block through arithmetical operations by vertically interpolating pixels of consecutive lines belonging to a field immediately preceding said given field; and
d) performing (2) a selection among an interframe predictive coding based on said first prediction block, an interfield predictive coding based on said second prediction block and an intra-field coding obtained by encoding directly said block without making use of a predictor,
**characterized in that** said refreshing of said digital television signal comprises:
e1) when said given field is an odd field, refreshing a variable number Nr of first consecutive strips of said given field by using said intra-field coding, thereby interrupting predictive coding; and
e2) when said given field is an even field subsequent to said odd field, carrying out said intra-field coding or said interfield predictive coding on said variable number Nr of second consecutive strips co-positioned with said first consecutive strips,
wherein each of said first and second consecutive strips is composed by a further number of consecutive television lines, and wherein said variable number Nr depends upon the complexity of the digital television signal, said complexity being measured by a storage fill level of an output elastic memory (9).

2. Method according to claim 1, **characterized in that** said variable number Nr of strips assumes a minimum value when said complexity of said digital television signal is high, said variable number Nr being gradually increased as said complexity decreases.

3. Method according to claim 1, **characterized in that** said step e2) comprises the step of carrying out the coding in a number of refreshed strips ranging from a minimum of one to a maximum of eight.

4. Method according to claim 3, wherein said step e1) is carried out in a refresh period, **characterized in that** said step e1) comprises the step of carrying out the refresh in a period comprised between about one second and one eighth of a second.

5. Method according to claim 1, **characterized by** the step of using a interframe predictive coding with motion compensation by limiting its selection of possible motion vectors.

6. Refresh coding system for refreshing a digital television signal transmitted in a redundancy reduction transmission system, said digital television signal comprising pixels arranged along the horizontal, vertical and time dimensions and consisting of frames made of odd and even fields, each of said fields having 1 to N1 television lines located in an intermediate position with respect to the lines of temporally adjacent fields, whereby a two-dimensional block coding is carried out in horizontal and vertical dimensions and a predictive coding in time dimension, said coding system comprising:
- means for forming a block of a given field of a given frame, said block including M segments of consecutive television lines, each of said M segments comprising N consecutive pixels;
- a first predictor (11) for forming a first prediction block by pixels belonging to a frame immediately preceding said given field;
- a second predictor (12) for constructing a second prediction block through arithmetical operations by vertically interpolating pixels of consecutive lines belonging to a field immediately preceding said given field; and
- a selector (2) for performing a selection among an inter-frame predictive coding based on said first prediction block, an inter-field predictive coding based on said second prediction block and an intra-field coding obtained by encoding directly said block without making use of a predictor, said system being **characterized by** comprising
- a refresh controller (20) for:
- when said field is an odd field, interrupting the predictive coding by refreshing a variable number Nr of first consecutive strips through an intra-field coding and, when said field is an even field subsequent to said odd field, applying an intra-field or interfield coding in said variable number Nr of second consecutive strips co-positioned with said first consecutive strips; and
- an elastic memory (9), said refresh controller (20) being subjected to said elastic memory (9),
wherein each of said first and second consecutive strips is composed by a further number of consecutive television lines, and wherein said variable number Nr depends upon a complexity of the digital television signal, said complexity being measured by a storage fill level of said output elastic memory (9).

## Patentansprüche

1. Verfahren zum Auffrischen eines in einem Übertragungssystem zur Redundanzreduzierung übertragenen digitalen Fernsehsignals, wobei dieses digitale Fernsehsignal Pixel umfasst, die entlang der horizontalen, vertikalen und Zeitrichtung angeordnet sind und die Rahmen aus ungeraden und geraden Feldern umfassen, wobei jedes dieser Felder 1 bis N1 Fernsehleitungen umfasst in einer Zwischenposition hinsichtlich der Zeilen der temporär aneinander angrenzenden Felder, wobei eine zweidimensionale Block-Codierung in dieser horizontalen und vertikalen Richtung und eine prädiktive Codierung in dieser Zeitrichtung ausgeführt wird,
wobei dieses Verfahren die folgenden Schritte umfasst:
a) Bilden eines Blocks eines bestimmten Felds eines bestimmten Rahmens, wobei dieser Block M Segmente aus aufeinander folgenden Fernsehzeilen umfasst und jedes der M Segmente N aufeinander folgende Pixel umfasst;
b) Bilden (11) eines ersten Prädiktionsblocks aus Pixeln, die zu einem Rahmen unmittelbar vor diesem bestimmten Feld gehören;
c) Konstruieren (12) eines zweiten Prädiktionsblocks mithilfe arithmetischer Operationen durch vertikales Interpolieren von Pixeln aus aufeinander folgenden Zeilen, die zu einem Feld unmittelbar vor diesem bestimmten Feld gehören; und
d) Durchführen (2) einer Auswahl aus einer prädiktiven Interframe-Codierung auf der Basis dieses ersten Prädiktionsblocks, einer prädiktiven Interfield-Codierung auf der Basis dieses zweiten Prädiktionsblocks und einer Interfield-Codierung, die durch direktes Codieren dieses Blocks ohne Verwendung eines Prädiktors erhalten wurde,
**dadurch gekennzeichnet, dass** diese Auffrischung dieses digitalen Fernsehsignals Folgendes umfasst:
e1) wenn dieses bestimmte Feld ein ungerades Feld ist, Auffrischen einer variablen Anzahl Nr erster aufeinander folgender Streifen dieses bestimmten Felds durch Verwendung dieser Intrafield-Codierung und **dadurch** Unterbrechen der prädiktiven Codierung; und
e2) wenn dieses bestimmte Feld ein gerades Feld ist, das auf dieses ungerade Feld folgt, Durchführen dieser Intrafield-Codierung oder dieser prädiktiven Inter-field-Codierung dieser variablen Anzahl Nr zweiter aufeinander folgender Streifen, die zusammen mit diesen ersten aufeinander folgenden Streifen positioniert wurden,
wobei jeder dieser ersten und zweiten aufeinander folgenden Streifen eine weitere Anzahl aufeinander folgender Fernsehzeilen umfasst, und wobei diese variable Anzahl Nr von der Komplexität des digitalen Fernsehsignals abhängt, und wobei diese Komplexität mithilfe eines Speicherfüllstands eines elastischen Ausgangsspeichers (9) gemessen wird.

2. Verfahren gemäß Anspruch 1, **dadurch gekennzeichnet, dass** diese variable Anzahl Nr von Streifen einen Mindestwert annimmt, wenn diese Komplexität dieses digitalen Fernsehsignals hoch ist, wobei diese variable Anzahl Nr mit sinkender Komplexität allmählich ansteigt.

3. Verfahren gemäß Anspruch 1, **dadurch gekennzeichnet, dass** dieser Schritt e2) den Schritt zum Durchführen der Codierung in einer Anzahl aufgefrischter Streifen von einem Minimum von Eins bis zu einem Maximum von Acht umfasst.

4. Verfahren gemäß Anspruch 3, wobei dieser Schritt e1) in einer Auffrischungsperiode durchgeführt wird, **dadurch gekennzeichnet, dass** dieser Schritt e1) den Schritt zum Durchführen der Auffrischung umfasst in einer Periode, die zwischen ca. einer Sekunde und einem Achtel einer Sekunde beträgt.

5. Verfahren gemäß Anspruch 1, **gekennzeichnet durch** den Schritt zur Verwendung einer prädiktiven mterframe-Codierung mit Bewegungskompensierung **durch** Begrenzen der Auswahl möglicher Bewegungsvektoren.

6. Auffrischungs-Codiersystem zum Auffrischen eines in einem Übertragungssystem zur Redundanzreduzierung übertragenen digitalen Fernsehsignals, wobei dieses digitale Fernsehsignal Pixel umfasst, die entlang der horizontalen, vertikalen und Zeitrichtung angeordnet sind und die Rahmen aus ungeraden und geraden Feldern umfassen, wobei jedes dieser Felder 1 bis N1 Fernsehleitungen umfasst in einer Zwischenposition hinsichtlich der Zeilen der temporär aneinander angrenzenden Felder, wobei eine zweidimensionale Block-Codierung in horizontaler und vertikaler Richtung und eine prädiktive Codierung in der Zeitrichtung ausgeführt wird, wobei dieses Codiersystem Folgendes umfasst:
- Mittel zum Bilden eines Blocks eines bestimmten Felds eines bestimmten Rahmens, wobei dieser Block M Segmente der aufeinander folgenden Fernsehzeilen umfasst und jedes der M Segmente N aufeinander folgende Pixel umfasst;
- einen ersten Prädiktor (11) zum Bilden eines ersten Prädiktionsblocks aus Pixeln, die zu einem Rahmen unmittelbar vor diesem bestimmten Feld gehören;
- einen zweiten Prädiktor (12) zum Konstruieren eines zweiten Prädiktionsblocks mithilfe arithmetischer Operationen durch vertikales Interpolieren von Pixeln aus aufeinander folgenden Zeilen, die zu einem Feld unmittelbar vor diesem bestimmten Feld gehören; und
- eine Wähleinrichtung (2) zur Durchführung einer Auswahl aus einer prädiktiven Interframe-Codierung auf der Basis dieses ersten Prädiktionsblocks, einer prädiktiven Interfield-Codierung auf der Basis dieses zweiten Prädiktionsblocks und einer Intrafield-Codierung, die durch direktes Codieren dieses Blocks ohne Verwendung eines Prädiktors erhalten wurde, wobei diese Wähleinrichtung **dadurch gekennzeichnet ist, dass** sie Folgendes umfasst:
- eine Auffrischungssteuerung (20) für folgende Aufgaben:
- wenn dieses Feld ein ungerades Feld ist, Unterbrechen der prädiktiven Codierung durch Auffrischen einer variablen Anzahl Nr erster aufeinander folgender Streifen durch eine Intrafield-Codierung, und wenn dieses Feld ein gerades Feld ist, das auf dieses ungerade Feld folgt, Anwenden einer Intrafield- oder Interfield-Codierung in dieser variablen Anzahl Nr zweiter aufeinander folgender Streifen, die zusammen mit diesen ersten aufeinander folgenden Streifen positioniert wurden; und
- ein elastischer Speicher (9), wobei diese Auffrischungs-Steuerung (20) von diesem elastischen Speicher (9) abhängt,
wobei jeder dieser ersten und zweiten aufeinander folgenden Streifen eine weitere Anzahl aufeinander folgender Fernsehzeilen umfasst, und wobei diese variable Anzahl Nr von der Komplexität des digitalen Fernsehsignals abhängt, und wobei diese Komplexität mithilfe eines Speicherfüllstands dieses elastischen Ausgangsspeichers (9) gemessen wird.

## Revendications

1. Procédé de rafraîchissement d'un signal de télévision numérique transmis dans un système de transmission à réduction de redondance, ledit signal de télévision numérique comprenant des pixels disposés dans les dimensions horizontale, verticale et temporelle et étant constitué d'images composées de trames paires et impaires, chacune des dites trames possédant 1 à N1 lignes de télévision située à une position intermédiaire par rapport aux lignes des trames voisines dans le temps, un codage en bloc bidimensionnel étant effectué dans les directions horizontale et vertical et un codage prédictif dans ladite dimension temporelle, ledit procédé comprenant les étapes suivantes :
a) Formation d'un bloc d'une trame donnée d'une image donnée, ledit bloc comprenant M segments de lignes de télévision consécutives, chacun des dits M segments comprenant N pixels consécutifs ;
b) Formation (11) d'un premier bloc de prédiction avec les pixels appartenant à une image qui précède immédiatement ladite trame donnée ;
c) Construction (12) d'un deuxième bloc de prédiction par le biais d'opérations arithmétiques par interpolation verticale des pixels des lignes consécutives appartenant à une trame précédant immédiatement ladite trame donnée ; et
d) Réalisation (2) d'une sélection entre un codage prédictif inter-image basé sur ledit premier bloc de prédiction, un codage prédictif inter-trame basé sur ledit deuxième bloc de prédiction et un codage dans la trame obtenu en codant directement ledit bloc sans utiliser de prédicteur,
**caractérisé en ce que** ledit rafraîchissement dudit signal de télévision numérique comprend :
e1) lorsque ladite trame donnée est une trame impaire, le rafraîchissement d'une nombre variable Nr de premières bandes consécutives de ladite trame donnée en utilisant ledit codage dans la trame, ce qui interrompt le codage prédictif; et
e2) lorsque ladite trame donnée est une trame paire qui suit ladite trame impaire, la réalisation dudit codage dans la trame ou ledit codage prédictif inter-trame sur ledit nombre variable Nr de deuxièmes bandes consécutives co-positionnées avec lesdites premières bandes consécutives,
chacune des dites premières et deuxièmes bandes consécutives étant composée d'un nombre supplémentaire de lignes de télévision consécutives et ledit nombre variable Nr dépendant de la complexité du signal de télévision numérique, ladite complexité étant mesurée par un taux de remplissage du stockage d'une mémoire élastique de sortie (9).

2. Procédé selon la revendication 1, **caractérisé en ce que** ledit nombre variable Nr de bandes suppose une valeur minimale lorsque ladite complexité dudit signal de télévision numérique est élevée, ledit nombre variable Nr étant graduellement augmenté à mesure que la complexité diminue.

3. Procédé selon la revendication 1, **caractérisé en ce que** ladite étape e2) comprend l'étape de réalisation du codage dans un certain nombre de bandes rafraîchies allant d'un minimum de un à un maximum de huit.

4. Procédé selon la revendication 3, ladite étape e1) étant exécutée pendant une période de rafraîchissement, **caractérisé en ce que** ladite étape e1) comprend l'étape de réalisation du rafraîchissement pendant une période comprise entre environ une seconde et un huitième de seconde.

5. Procédé selon la revendication 1, **caractérisé par** l'étape d'utilisation d'un codage prédictif inter-image avec compensation du mouvement en limitant sa sélection des vecteurs de mouvement possibles.

6. Système de codage de rafraîchissement pour rafraîchir un signal de télévision numérique transmis dans un système de transmission à réduction de redondance, ledit signal de télévision numérique comprenant des pixels disposés dans les dimensions horizontale, verticale et temporelle et étant constitué d'images composées de trames paires et impaires, chacune des dites trames possédant 1 à N1 lignes de télévision située à une position intermédiaire par rapport aux lignes des trames voisines dans le temps, un codage en bloc bidimensionnel étant effectué dans les directions horizontale et vertical et un codage prédictif dans la dimension temporelle, ledit système de codage comprenant :
- Des moyens pour former un bloc d'une trame donnée d'une image donnée, ledit bloc comprenant M segments de lignes de télévision consécutives, chacun des dits M segments comprenant N pixels consécutifs ;
- Un premier prédicteur (11) pour former un premier bloc de prédiction avec les pixels appartenant à une image qui précède immédiatement ladite trame donnée ;
- Un deuxième prédicteur (12) pour construire un deuxième bloc de prédiction par le biais d'opérations arithmétiques par interpolation verticale des pixels des lignes consécutives appartenant à une trame précédant immédiatement ladite trame donnée ; et
- Un sélecteur (2) pour effectuer une sélection entre un codage prédictif inter-image basé sur ledit premier bloc de prédiction, un codage prédictif inter-trame basé sur ledit deuxième bloc de prédiction et un codage dans la trame obtenu en codant directement ledit bloc sans utiliser de prédicteur, ledit système étant **caractérisé en ce qu'**il comprend :
- un contrôleur de rafraîchissement (20) pour :
- lorsque ladite trame donnée est une trame impaire, interrompre le codage prédictif en rafraîchissant un nombre variable Nr de premières bandes consécutives par le biais d'un codage dans la trame et, lorsque ladite trame est une trame paire qui suit ladite trame impaire, application d'un codage prédictif dans la trame ou inter-trame audit nombre variable Nr de deuxièmes bandes consécutives co-positionnées avec lesdites premières bandes consécutives ; et
- une mémoire élastique (9), ledit contrôleur de rafraîchissement (20) étant soumis à ladite mémoire élastique (9),
chacune des dites premières et deuxièmes bandes consécutives étant composée d'un nombre supplémentaire de lignes de télévision consécutives et ledit nombre variable Nr dépendant de la complexité du signal de télévision numérique, ladite complexité étant mesurée par un taux de remplissage du stockage de ladite mémoire élastique de sortie (9).
